# EUROPEAN PATENT APPLICATION

(11) **EP 1 983 687 A1**
(43) Date of publication of application: **22.10.2008**
(21) Application number: 07008084.1
(22) Date of filing: 20.04.2007
(51) Int. Cl.: H04L 12/26

(54) **Methods for estimating self-similarity degree and related estimator**

(71) Applicant: Nokia Siemens Networks Oy, 02610 Espoo (FI)
(72) Inventor: Freire, Máro, 6200-314 Covilha (PT); Garcia, Nuno, 6200-502 Covilha (PT); Hajduczenia, Marek, 4505-314 Fiaes (PT); Inacio, Pedro, 6200-230 Aldeia de Carvalho (PT); Monteiro, Paulo, 3930-209 Ilhavo (PT); Silva, Henrique, 3030-076 Coimbra (PT)
(74) Representative: Fischer, Michael

(57) **Abstract**

A Method and a related estimator are presented for a dynamically estimation of a self-similarity degree adapted for a Hurst based monitoring of flows of streaming data, whereby:
- a set of streaming data points X1, X2, ..., Xk has been sequentially fed into a processing module in order to calculate a first value H1 of the self-similarity degree by means of auxiliary variables AV1, AV2, ..., AV1 with 1 greater than 1, wherein said index (k ≥ 1) is continuously incremented for each new fed data point,
- a new streaming data point Xk+1 is fed into the processing module wherein a second actualized value H2 of the self-similarity degree is newly calculated.
- according to a predefined finite number n of data points, the processing module provides a windowed based calculating mode which is activated by incoming of the new streaming data point Xk+1 if the index k is at least equal to the finite number n and wherein at least the first data point X1 of the set of streaming data points X1, X2,..., Xn, Xn+1 which is the oldest having been fed in the processing module is excluded from the processing module before the second actualized value H2 of the self-similarity degree is estimated by means of updated auxiliary variables AVk+1, AVk+2, ..., AVk+1 that takes in account the newest fed data point Xk+1 and does not takes in account the oldest fed data point value X1. By this way, one main advantage lies in a significant enhancement of the dynamics for an estimation process of a self-similarity.

## Description

The invention relates to a method for estimating self-similarity degree, an adapted estimator and its use according to preambles of claims 1, 4 and 5.

The property of self-similarity, which is connected with the state of less energy, is present on many natural and artificial processes (delay from a first data unit in a telecommunications traffic, for instance). The description of such processes through mathematical models is difficult, mostly because of their apparent chaotic behavior. Nevertheless, their self-similarity degree, which can be extrapolated from a statistic known as the Hurst parameter (also defined.as "Hparam" in the following document), can be used to classify them and anticipate their future status.
As the methods to estimate the Hparam were developed by mathematicians, for whom the computational efficiency of the algorithms was not important, there is a lack of means to calculate it in a real-time and point-by-point manner. This problem was addressed in a previous work of the applicant, were a set of modifications on a number of well-known Hparam estimators was proposed to solve the problem of estimation of the Hparam for a data set with a continuously increasing size. The said changes targeted the introduction of means for assessing the value that reflects the degree of self-similarity of an arbitrary data series as a whole (a global Hparam) upon reception of a new data sample of the given process, thus resulting in a point-by-point calculation regime.

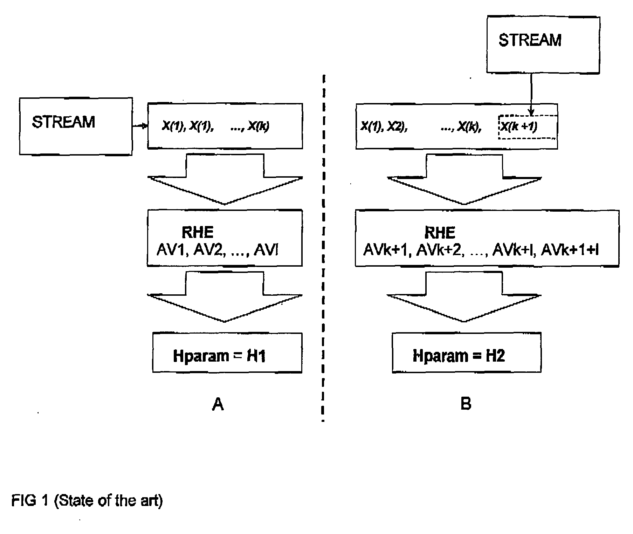

In resume and according to figure 1 as state of the art, a method is presently known for a dynamically estimation of a self-similarity degree Hparam adapted for a Hurst based monitoring of flows of streaming data STREAM, whereby:
- a set of streaming data points X1, X2, ..., Xk has been sequentially fed into a processing module RHE (= Retrospective Hurst estimator, see step A) in order to calculate a first value H1 of the self-similarity degree by means of auxiliary variables AV1, AV2, ..., AV1 with 1 ≥ 1, wherein said index k ≥ 1 is (in term of time) continuously incremented for each new fed data point,
- a new streaming data point Xk+1 is fed into the processing module wherein a second actualized value H2 of the self-similarity degree Hparam is newly calculated (see step B) wherein further auxiliary variables AVk+1, AVk+2, ..., AVk+1, AVk+1+1 are also actualised if needed.

This method presents however a failing adjustment of the inverse relation between a history impact and the sensitivity related to the (chronological) evolution of Hparam's values. Moreover this method is not suitable for an operating on a system requiring real-time (that means instantaneous) assessment of the Hparam of a limited and dynamic set of flowing values.

Although some newly methods permit to decrease the calculation time of actualized values of Hparam by continuous incoming data points, these known methods are always and hence suffering in term of dynamical estimation results. Due to growing number of data points that are inputted in at least one processing module, the history impact is also increasing and the while, for some of them the number of auxiliary variables is also increasing as well and provides too long calculation times or constant Hparam values (failing to be dynamic).

In the following invention and for a purpose of clarity, it will not be referred to a specifically mathematical art of used calculation method of the Hparam, because the invention should be adapted for some of them. However, as examples, following basic methods can be used:
- Rescaled Statistic methods ("RS") (sometimes referred to so-called "pox-plots");
- Variance Time methods ("VT");
- Variance of Residuals ("VR");
- Absolute Moment Time ("AMT");
- Whittle's Maximum Likelihood estimator ("WML");
- Wavelet transform signal energy estimators ("WAV");
- Embedded Branching Process method ("EBP");
- Detrended Fluctuation Analysis ("DFA");
- Or other modified methods based on the previous one.

The aim of the invention is to solve all the previous mentioned problems and particularly to propose a method for estimation of a self-similarity degree (like the Hurst parameter Hparam) with an enhanced dynamics.

A first embodiment of the invention is described for a method for an estimation of a self-similarity degree adapted for a Hurst based monitoring of flows of streaming data, whereby:
- a set of streaming data points X1, X2, ..., Xk has been sequentially fed into a processing module in order to calculate a first value H1 of the self-similarity degree, e.g. Hparam, by means of auxiliary variables AV1, AV2, ..., AV1 with 1 ≥ 1, wherein said index k ≥ 1 is (in term of time) continuously incremented for each new fed data point,
- a new streaming data point Xk+1 is fed into the processing module wherein a second actualized value H2 of the self-similarity degree is newly calculated.
This common method is also based on a growing number of data points wherein the oldest is fed in the set of existing data points in order to recalculate the value of Hparam. By this step, the auxiliary variables are recursively updated, and their number can be significantly important. In order to enhance the dynamics of this actualization in term of limited number of computing steps, the invention proposes to restrict the inputting of data points on a windowed-shift manner.

As predicted in the state-of-the-art, a usable property of a self-similar process can be obtain for a very loaded traffic of data whose data points are continuously fed in the processing module wherein the mathematical method of calculating Hparam is involved. In other words, a simple extracting of a small number of incoming data points could infringe the property of self-similarity and hence discard the usability of such an estimation method.

For this purpose, a second more detailed embodiment of the invention proposes a very reliable way to implement the window-shift method, so that the estimation of a so-called "local" Hparam can be provided at an enhanced dynamics and respectful to a process adapted to a self-similar behaviour.

This advantageous method applies in accordance to a predefined finite number (n) of data points which can be defined at one value or can be variable/adjustable by a user or a monitoring means who/which adapts the length of the sampled data points in the set which is fed in the processing module. This aspect provides an enhanced flexibility according to the expected points of interest of the estimation method. In addition as well as independent method to a known continuous point-to-point processing, the processing module provides hence a novel like some windowed based calculating mode which is activated by incoming of the new streaming data point Xk+1 if the index k is at least equal to the finite number n and wherein at least the first data point X1 of the set of streaming data points X1, X2,..., Xn, Xn+1 which is the oldest having been fed in the processing module is excluded from the processing module before the second actualized value H2 of the self-similarity degree is estimated by means of updated auxiliary variables AVk+1, AVk+2, ..., AV1+k that takes in account the newest fed data point Xk+1.
It is here important to point out that the chronology of extracting the oldest fed data point, of updating the auxiliary variables an of including the newest data point plays a major role for solving the problems mentioned in the invention, particularly in term of dynamically enhancement in a self-similar process.

Analogically this method could be compared to a basic correlation function applied on the estimation process in order to calculate a new value of the Hurst parameter. But, this analogy is not obvious, because this way of making is antagonist to other known estimation processes wherein basically a self-similarity degree has to be estimated on a growing number of inputted data points in the processing module(s). As far as the self-similarity is ensured in the present invention (that means for at least a corresponding minimal number of inputted data points), the present method is activated and limits very advantageously an increasing amount of continuously inputted data points, so that the whole dynamics of the estimation method is hence effectively improved.

This adapted windowing is also made recurring to an advantageous smaller number of update's operations, because the length of the set does not exceed a predefined number and the time of recalculating the auxiliary variables is nearly constant between two shifted windows.

This window based method is particularly well adapted to software/hardware implementations because the number of sub-estimation-modules in a whole corresponding estimator of Hparam is always physically limited and the number of operations required for every actualization does not depend (in any way) on the number n of data points to be taken into account for the estimation.

In a further embodiment of the invention, an estimator of self-similarity degree adapted for a Hurst based dynamic monitoring of flows of streaming data will be also presented as well as its advantageous implementation for the method described above and in the rest of the document.

The estimator and the related method of the invention are finally well adapted for the plurality of application fields. Especially an advantageous use of the estimator is possible, wherein data points are streaming in form of high loaded flows that are exposed to a risk of collapse, as for example in a data traffic by:
- a network and its components like nodes, routers, switches, as well for controlling its access or its structure in layers,
- a software or hardware platform for analysis and exchange of secured data with at least another platform like in a financial field,
- a platform of analysis of data related to hydrology, geology, medicine, data recognition or data prediction.
It is obvious that this list of fields of application is not exhaustive, but presents some strategically, actual domains of interest.

The described embodiments and their advantages are further explained by the following examples and drawings, whereby:
- Drawing 1: shows a dynamically estimation's scheme of a self-similarity degree Hparam adapted for a Hurst based monitoring of flows of streaming data according to the state of the art,
- Drawing 2: shows a dynamically estimation's scheme of a self-similarity degree Hparam adapted for a Hurst based monitoring of flows of streaming data according to the invention,
- Drawing 3: shows a window-based estimator by incompletely full window,
- Drawing 4: shows a window-based estimator by full window.

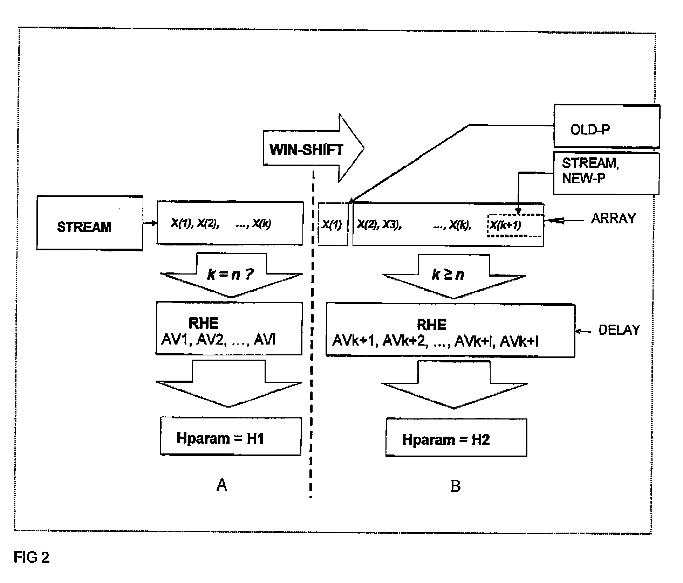

Figure 1 has been described in the specification part for the state-of-the-art, but can serve as basically description for figure 2, in which a dynamically estimation's scheme of a self-similarity degree Hparam adapted for a Hurst based monitoring of flows of streaming data is presented according to the invention.

In this way, the method provides a dynamically estimation of a self-similarity degree Hparam adapted for a Hurst based monitoring of flows of streaming data STREAM (for example at a node of a data network), whereby:
- During a first step A, a set of streaming data points X1, X2, ..., Xk has been sequentially fed into a processing module RHE in order to calculate a first value H1 of the self-similarity degree Hparam by means of auxiliary variables AV1, AV2, ..., AV1 where 1 is an integer greater than 1 and wherein said index k ≥ 1 is continuously incremented for each new fed data point or its associated value,
- During the first step A, it is assumed that the
- a new streaming data point Xk+1 is now complementary fed into the processing module RHE wherein a second actualized value H2 of the self-similarity degree Hparam is newly calculated (see step B),

According to a predefined finite number n of data points, an array ARRAY is also predefined in order to ensure that as far k is smaller than n, the estimation is provided like in the state-of-the-art. In that case, the array ARRAY is considered as incompletely full. It is assumed that the finite number n is chosen high enough to ensure a self-similarity behaviour of the monitored system as well as small enough to limit the corresponding re-calculations in the processing module RHE (that means to enhance the dynamics of the estimation method). The number n can be hence predefined at a user side in accordance to typical behaviour(s) of expected monitoring(s). It can be also adjusted according to changes related to different behaviour of the monitored data stream (high flows by day/ lower flows by night). By means of the limiting size n of the array ARRAY, the processing module RHE provides a windowed based calculating mode which is only activable by incoming of the new streaming data point Xk+1 if the index k is at least equal or greater to the finite number n. Such a condition can be implemented by counting the incoming data points at the input of the processing module RHE (see the reference "k=n?" for step A and see the reference "k≥n" for step B that starts the new method). This aspect is represented in the first step B in figure 2 wherein the windows based estimation WIN-SHIFT can be engaged or activated. For that purpose, at least the first data point X1 of the set of streaming data points X1, X2,..., Xn, Xn+1 which is the oldest point OLD-P having been fed in the processing module RHE (during step A) is excluded from the processing module before the activation of step B that means before the second actualized value H2 of the self-similarity degree is estimated by means of updated auxiliary variables AVk+1, AVk+2, ..., AV1+k that takes in account the newest fed data point NEW-P, Xk+1 in the actualized array ARRAY on which a kind of constant delay DELAY is implemented from step B to a further similar step.

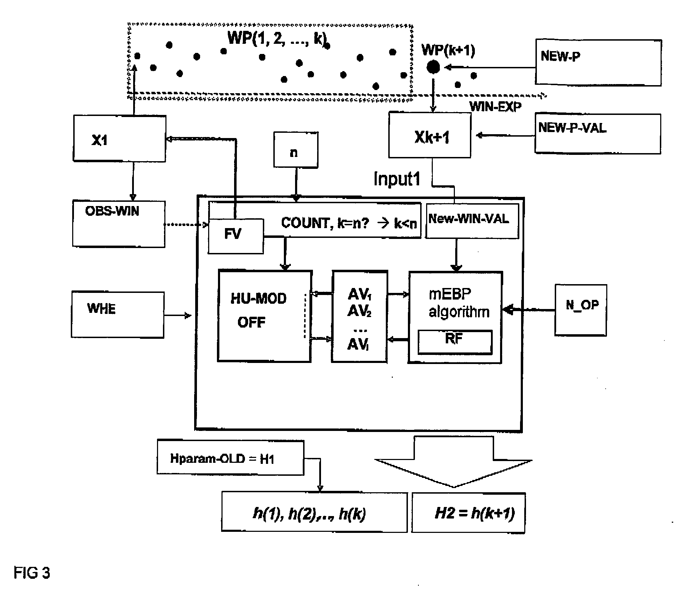

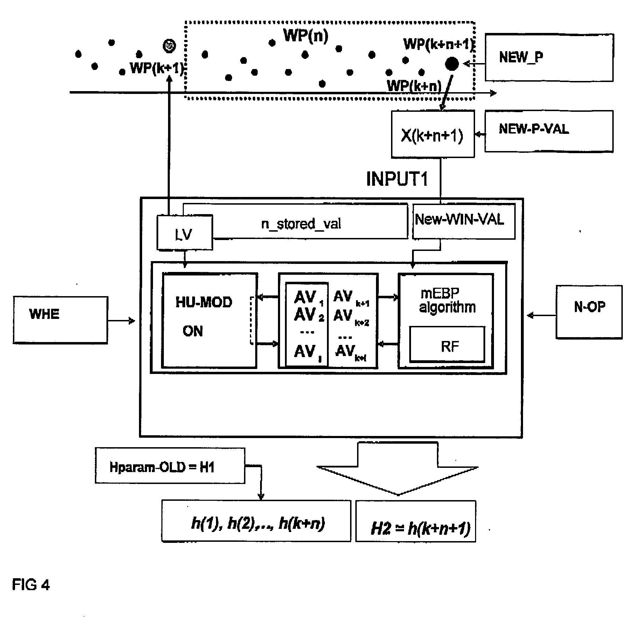

In figure 3, a possible window-based estimator is represented according to apply the method mentioned above. The estimator is here in a first state wherein a plurality of k data points X1, X2, ..., Xk are issued from signals WP(1, 2, ..., k) measured in the stream and have been inputted and stored in an array comparably to a window which is presently incompletely full. Referred to figure 2, that means that the estimators runs under step A (the condition "k=n?" is not satisfied because k<n) with an array of data points limited by a first data point X1 and a new coming one NEW-P, Xk+1 but wherein k+1 is still less than the predefined size n of the final window. In another words, a windowing is provided like an expanded window WIN-EXP until the final size n of window is reached (step B of figure 2).
As the new data point Xk+1 is going to belong to the expanding window WIN-EXP, a value NEW-P-VAL of this data point is extracted and inputted via a single input INPUT1 in the so called window Hurst estimator WHE.
This estimator WHE of self-similarity degree is adapted for a Hurst based monitoring of flows of streaming data, and comprises:
- the input INPUT1 for a sequential feeding of a number of streaming data,
- a processing module with an estimation_algorithm, which is represented here over the reference mEBP in order to symbolize not restrictively as example a possible mathematical estimation method (mEBP = modified Embedded Branching Process), for estimating a value Hparam-OLD = h(1), H(2), ..., h(k) of the self-similarity degree by means of auxiliary variables AV1, AV2, ..., AV1 for which of them at least one value is additionally updated by incoming of the new data point Xk+1 at the input INPUT1. As said before, a method based on a modified windowed version of one of the mathematical estimators (here by means of mEBP) is used(whose modified form was developed by the applicant), but another art of calculation could be used as far as it satisfies for estimating a self-similarity degree.
Furthermore the estimator WHE comprises a data point counter COUNT for controlling that over a, here external predefinable, finite number n of inputted data points, the auxiliary variables are stored in an activable history module HU-MOD that updates them for a new estimation of the value h(k+1) of the self-similarity degree only after the oldest streaming data point X1 is outputted from the processing module as the new streaming data point Xk+1 has already been inputted in the input INPUT1 of the processing module (or generally of one estimator). Here, as k<n is communicated from the counter COUNT to the estimator or directly to the history module HU-MOD, the history module is inactive on position OFF and one or all auxiliary variables are not updated. Only the window for catching the values of data points is growing and related Hurst parameters h(1), h(2), ..., h(k), h(k+1) are sequentially calculated and outputted from the estimator WHE for diverse possible uses of monitoring.
Additionally, an observation window OBS-WIN is connected with the counter COUNT in order to monitor if the window is full with the definable limit of n data points and especially to register or store the oldest inputted data point X1 or its so called associated first value FV in interest of the further Hurst estimation. This observation window has also a function of triggering a deleting of the oldest point from the actualisable window containing the array Xl, ..., Xk, as it will be the case in figure 4.
A module N_OP is also connected to the processing module mEBP for a modified _Hurst estimation by running the program that estimates the self-similarity degree and provides that a fixed number of operations are imposed to the estimator in order to minimize a possible delay for example only one and not all auxiliary variables have to be updated by means of recursive formulas RF, so that the dynamics will be enhanced. In resume, figure 3 represents an first estimator's mode for which the an input window is being filled with a limited but continuously growing number of data points and by which a first self-similar behaviour of the monitored first inputted flow of data points is possible.

Figure 4 represents according to figure 3 the second activable mode (in also activated state) of the estimator WHE coupled with a full-filled window (the condition "k=n" is reached, see step B of figure 2), wherein n has been chosen or has to be re-adapted for monitoring the flow of data under self-similarity's conditions, but also for permitting a limitation in term of number of operations necessary for the estimation of the Hurst parameter in order to enhance the whole dynamics of the estimator.
Principally the way of processing is the same as in figure except that the window's size n is being constant and full with the data points WP(n) after a new data point NEW_P = WP(k+n+l) has been covered by the window, what also happens after the oldest incoming points WP(k+1) was discarded from the window itself. In other words, as the counter COUNT detects that the number of values n_stored_val extracted from the data points in the window should exceed the predefined number n, the last value LV which is the oldest having been fed in the processing module is excluded from the processing module and the auxiliary variables AVs are updated so as to not reflect the impact of the leaving point LV, WP(k+1) before the second actualized value H2 = h(k+n+1) of the self-similarity degree is estimated by means of updated auxiliary variables AVk+1, AVk+2, ..., AVk+1 that takes in account the newest fed data point value Xk+1 and does not takes in account the oldest fed data point value LV, WP(k+1) (or X1 according to figure 3, if k=n). For this purpose, it is made use of the history update module HU-MOD in which auxiliary variables AV1, AV2, ..., AV1 can be stored for an actualisation by step B, the history update module HU-MOD is activated in a mode ON, so that especially before each calculation of the actualized value H2 the actual auxiliary variables AV1, AV2, ..., AV1 are stored in the history update module before their updating in new "updated" auxiliary variables AVk+1, AVk+2, ..., AV1+k. The auxiliary variables are always calculated/updated by means of the same recursive formulas RF joined to the preferred modified-estimation method. It is also advantageous to use this way of calculating, because the window size has no influence on the updating and only a few part instead of all the auxiliary variables has to be updated, so that the dynamics can be further enhanced.

## Claims

1. Method for a dynamically estimation of a self-similarity degree adapted for a Hurst based monitoring of flows of streaming data, whereby:
- a set of streaming data points (X1, X2, ..., Xk) has been sequentially fed into a processing module in order to calculate a first value (H1) of the self-similarity degree by means of auxiliary variables (AV1, AV2, ..., AV1) with (1) greater than 1, wherein said index (k ≥ 1) is continuously incremented for each new fed data point,
- a new streaming data point (Xk+1) is fed into the processing module wherein a second actualized value (H2) of the self-similarity degree is newly calculated,
**characterized in that**
- according to a predefined finite number (n) of data points, the processing module provides a windowed based calculating mode which is activated by incoming of the new streaming data point (Xk+1) if the index (k) is at least equal to the finite number (n) and wherein at least the first data point (X1) of the set of streaming data points (X1, X2,..., Xn, Xn+1) which is the oldest having been fed in the processing module is excluded from the processing module before the second actualized value (H2) of the self-similarity degree is estimated by means of updated auxiliary variables (AVk+1, AVk+2, ..., AVk+1) that takes in account the newest fed data point (Xk+1).

2. Method according to claim 1, whereby before each calculation of the actualized value (H2) the auxiliary variables (AV1, AV2, ..., AV1) are stored in an history module before their updating in new auxiliary variables (AVk+1, AVk+2, ..., AV1+k).

3. Method according to claim 1 or 2, whereby the finite number (n) limits an observation window size of data streams which is predefined, adjustable at a user side.

4. Estimator of self-similarity degree adapted for a Hurst based monitoring of flows of streaming data, that comprises:
- an input for a sequential feeding of a number of streaming data,
- a processing module for estimating a value of the self-similarity degree by means of auxiliary variables for which of them at least one value is additionally updated by incoming of a new data point at the input,
**characterized in that,**
a data point counter is provided controlling that over a predefined finite number (n) of inputted data points, the auxiliary variables are stored in a history module that updates them for a new estimation of the value of the self-similarity degree only after the oldest streaming data point is outputted from the processing module as the new streaming data point has already been inputted in the input of the processing module.

5. Use of the estimator according to claim 4, wherein data points are streaming in form of high loaded flows that are exposed to a risk of collapse, as for example in a data traffic by:
- a network and its components like nodes, routers, switches, as well for controlling its access or its structure in layers,
- a software or hardware platform for analysis and exchange of secured data with at least another platform like in a financial field,
- a platform of analysis of data related to hydrology, geology, medicine, data recognition or data prediction.
